# EUROPEAN PATENT APPLICATION

(11) **EP 4 737 360 A1**
(43) Date of publication of application: **06.05.2026**
(21) Application number: 24869656.9
(22) Date of filing: 08.04.2024
(51) Int. Cl.: B65G 47/22, B65G 37/00, B65G 47/90, H01M 10/04, H01M 6/00

(54) **MATERIAL CONVEYING APPARATUS, BATTERY ASSEMBLY SYSTEM, PRODUCTION LINE, AND ASSEMBLY METHOD**

(30) Priority: 27.09.2023 CN 202311262903
(71) Applicant: Contemporary Amperex Technology Co., Limited, Ningde, Fujian 352100 (CN)
(72) Inventor: XIA, Yijun, Ningde, Fujian 352100 (CN); LIU, Hailong, Ningde, Fujian 352100 (CN); YU, Chenqin, Ningde, Fujian 352100 (CN); GAO, Xitang, Ningde, Fujian 352100 (CN)
(74) Representative: Ran, Handong
(86) International application number: PCT/CN2024/086635
(87) International publication number: WO 2025/066087

(57) **Abstract**

A material conveying apparatus, a battery assembly system, a production line, and an assembly method. The material conveying apparatus comprises a frame (10), a conveying mechanism (20), a limiting mechanism (30), and a carrying mechanism (40). The conveying mechanism (20) comprises two conveying paths arranged on the frame (10), one of the two conveying paths is an input path (21) used for conveying a box body (60) loaded with materials, and the other one of the two conveying paths is an output path (22) used for conveying the unloaded box body (60). The limiting mechanism (30) is disposed on the frame (10) or the conveying mechanism (20) and is used to define on the input path (21) a waiting position (21a) and a material pick-up position (21b) arranged in the input direction, and define on the output path (22) a transfer position (22a) and a removal position (22b) arranged in the output direction. The carrying mechanism (40) is used for carrying to the transfer position (22a) the box body (60) which is located at the material pick-up position (21b). The material conveying apparatus can be adapted to transportation of various battery assembly materials and has good universality.

## Description

### CROSS-REFERENCE TO RELATED APPLICATIONS

The present disclosure is filed based on and claims priority to Chinese Patent Application No. 202311262903.2, entitled "MATERIAL CONVEYING APPARATUS AND ASSEMBLY SYSTEM, PRODUCTION LINE AND ASSEMBLY METHOD FOR BATTERY" and filed on September 27, 2023 , which is hereby incorporated herein as reference in its entirety.

### TECHNICAL FIELD

The present disclosure relates to the technical field of battery assembly, and in particular, to a material conveying apparatus and an assembly system, production line and assembly method for a battery.

### BACKGROUND

New-energy batteries are increasingly widely applied in life and industries. For example, new-energy vehicles equipped with batteries have been widely used. Additionally, the batteries are further increasingly applied in the field of energy storage etc.

Battery assembly requires installation of a plurality of components, such as an explosion-proof valve, a cable tie, etc. In the related art, each component is conveyed to a pre-assembly position by a corresponding conveying structure and then assembled. Since the conveying structures for the components are different and cannot be universal, the conveying structures involved in battery assembly are diversified and complex.

### SUMMARY OF THE INVENTION

In view of this, the embodiments of the present disclosure are desired to provide a material conveying apparatus and an assembly system, production line and assembly method for a battery that can adapt to transportation of various types of battery assembly materials.

To achieve the above-mentioned object, a first aspect of an embodiment of the present disclosure provides a material conveying apparatus, including a chassis, a conveying mechanism, a limiting mechanism, and a handling mechanism;
the conveying mechanism includes two conveying channels provided on the chassis, one of the two conveying channels is a feeding channel for conveying a box carrying the material, and the other of the two conveying channels is a discharging channel for conveying the box that is unloaded;
the limiting mechanism is provided on the chassis or the conveying mechanism, and is used to limit on the feeding channel a waiting position and a material taking position arranged along a feeding direction, and to limit on the discharging channel a transfer position and a removal position arranged along a discharging direction;
the handling mechanism is provided on the conveying mechanism or the chassis, and is used to handle the box located at the material taking position to the transfer position.

For the material conveying apparatus of the embodiment of the present disclosure, the box carrying a material flows in from the feeding channel, is, before entering the material taking position, limited at the waiting position by the limiting mechanism that is in the waiting position to control a material inflow speed, flows into the material taking position after limiting is released, and is limited at the material taking position by the limiting mechanism that is in the material taking position to facilitate removal of the material. After the material within the box in the material taking position is entirely removed, limiting is released, and the box unloaded is handled to the transfer position on the discharging channel by the handling mechanism, and is limited by the limiting mechanism that is in the transfer position. After limiting is released, the box flows into the removal position, is limited by the limiting mechanism that is in the removal position, thereby controlling the material outflow speed, and flows out of the discharging channel after limiting is released. Various materials for battery assembly may be loaded into the box and conveyed by the material conveying apparatus, so the material conveying apparatus is highly versatile.

In some implementations, the feeding channel and the discharging channel are provided side by side on the chassis, and the feeding direction is opposite to the discharging direction.

In this way, a position where the box enters the feeding channel and a position where the box flows out of the discharging channel are on the same side of the chassis, reducing a distance between the position where the box enters the feeding channel and the position where the box flows out of the discharging channel, thereby facilitating transportation of the box.

In some implementations, the waiting position and the removal position are aligned along a direction perpendicular to an extension direction of the conveying channel, the waiting position and the removal position forming a first row of regions;
the material taking position and the transfer position are aligned along the direction perpendicular to the extension direction of the conveying channel, the material taking position and the transfer position forming a second row of regions;
the handling mechanism is provided between the first row of regions and the second row of regions.

By aligning the material taking position and the transfer position along the direction perpendicular to the extension direction of the conveying channel, a path between the material taking position and the transfer position is shortened, enabling improvement in the efficiency of the handling mechanism in handling the box. The handling mechanism is provided between the first row of regions and the second row of regions, allowing the handling mechanism to avoid a manipulator that grabs the material in the box in the material taking position.

In some implementations, the limiting mechanism includes fixed limiting assemblies and movable limiting assemblies;
the fixed limiting assemblies can limit the box and are, respectively, provided on a side of the material taking position away from the waiting position and a side of the transfer position away from the removal position;
the movable limiting assemblies can limit or avoid the box and are, respectively, provided on a side of the waiting position close to the material taking position and a side of the removal position away from the transfer position.

The box is blocked from being removed from the feeding channel or the discharging channel by the fixed limiting assemblies. The movable limiting assemblies can block the box to allow the box to be in the waiting position or the removal position, and can perform avoidance so as not to block movement of the box, controlling the material inflow and outflow speeds.

In some implementations, the fixed limiting assembly includes a first limiting member and a cushioning member, and the cushioning member is provided on a side of the first limiting member facing the box for the purpose of contact with the box.

The cushioning member is used to reduce an impact force at the time of the box being limited, thereby reducing a vibration caused to the material inside the box during limiting, and reducing damage to the box during a collision.

In some implementations, the movable limiting assembly includes a first driving member and a second limiting member, the first driving member being in driving connection to the second limiting member;
the first driving member is capable of driving the second limiting member to extend to limit the box; the first driving member is capable of driving the second limiting member to retract to avoid the box.

The box is limited by the first driving member driving the second limiting member to extend, and limiting of the box is released by the first driving member driving the second limiting member to retract. In this way, limiting or avoidance for the box is achieved.

In some implementations, the limiting mechanism further includes positioning assemblies that can position or avoid the box and are, respectively, provided on a side of the material taking position close to the waiting position and a side of the transfer position close to the removal position, for the purpose of applying to the box an acting force toward the corresponding fixed limiting assembly to position the box.

By the positioning assembly applying to the box the acting force toward the corresponding fixed limiting assembly to position the boxes that are in the material taking position and the transfer position, it is convenient for the manipulator to acquire a material in the box that is in the material taking position.

In some implementations, the positioning assembly includes a second driving member and a third limiting member, the second driving member being in driving connection to the third limiting member;
the second driving member is capable of driving the third limiting member to revolve into a moving path of the box, and to retract for applying an acting force to the box; the second driving member is capable of driving the third limiting member to extend to release the application of the acting force to the box, and to revolve out of the moving path of the box for avoiding the box.

The second driving member is allowed to drive the third limiting member to revolve into the moving path of the box, and to retract for applying the acting force to the box, thereby cooperating with the corresponding fixed limiting assembly to achieve positioning of the box. The second driving member is allowed to drive the third limiting member to extend for releasing the application of the acting force to the box, and to revolve out of the moving path of the box, thereby achieving avoidance of the box.

In some implementations, the material conveying apparatus further includes a plurality of first detection mechanisms that are used, respectively, to detect whether the box is present in the waiting position, the material taking position, the transfer position, and the removal position.

When the first detection mechanism that is in the material taking position obtains a detection signal for the box, the aforementioned detection signal can be used to trigger the positioning assemblies to position the box that is in the material taking position, as well as trigger control for a taking action of the manipulator outside. When the first detection mechanism that is in the waiting position obtains a detection signal for the box, the aforementioned detection signal is used to trigger the movable limiting assemblies to limit the box that is in the waiting position. When the first detection mechanism that is in the transfer position obtains a detection signal for the box, the aforementioned detection signal is used to trigger the positioning assemblies to position the box that is in the transfer position. When the first detection mechanism that is in the removal position obtains a detection signal for the box, the aforementioned detection signal is used to trigger the movable limiting assemblies to limit the box that is in the removal position.

In some implementations, the handling mechanism includes a transverse frame, a grabbing mechanism, an adjustment mechanism, and a second detection mechanism;
the transverse frame is provided on the conveying mechanism or the chassis;
the grabbing mechanism is used for grabbing the box;
the adjustment mechanism is provided on the transverse frame and connected to the grabbing mechanism, for adjusting a position of the grabbing mechanism;
the second detection mechanism is provided on the grabbing mechanism or the transverse frame, and is used to detect a height of a tray of the box.

The grabbing mechanism is moved between the material taking position and the transfer position through the position of the grabbing mechanism being adjusted by the adjustment mechanism provided on the transverse frame.

In some implementations, the grabbing mechanism includes a base plate, a first grabbing mechanism, and a second grabbing mechanism;
the base plate is connected to the adjustment mechanism;
the first grabbing mechanism is used to grab a tray of the box;
the second grabbing mechanism is used to grab a material frame of the box, the first grabbing mechanism, the second grabbing mechanism, and the second detection mechanism are all provided on the base plate, and the second grabbing mechanism is located above the first grabbing mechanism.

In accordance with height information for a tray within the material frame detected by the second detection mechanism, a height of the first grabbing mechanism is adjusted to accurately grab the tray in the box. When the first grabbing mechanism grabs a tray of the box, the second grabbing mechanism located above the first grabbing mechanism is not prone to interfering with the material frame of the box.

In some implementations, the first grabbing mechanism includes two connecting sliding rails, a plurality of connecting brackets, and a suction cup;
the two connecting sliding rails are provided in a spaced manner on the base plate;
the plurality of connecting brackets have an elongated hole with an extension direction perpendicular to the connecting sliding rail, the connecting bracket being fasten connected to the connecting sliding rail via the elongated hole; and
Each of the connecting brackets is provided with the suction cup thereon for sucking the tray.

In this way, the suction cup is regulated in an extension range of the elongated hole and the connecting sliding rail. By allowing the extension direction of the elongated hole to be perpendicular to the connecting sliding rail, a regulation range can be increased with the elongated hole and the connecting sliding rail being constant in length.

In some implementations, the second grabbing mechanism includes a clamping member and a regulating member;
the clamping member is used to clamp the material frame;
the regulating member is provided on the base plate, two ends of the regulating member being, respectively, connected to two clamping members to regulate a distance for the clamping members.

Clamping of the material frame is achieved by the distance for the two clamping members being adjusted by the regulating member.

In some implementations, the conveying channel includes:
two guide side rails provided in spaced manner that are provided on the chassis;
a plurality of conveying rollers rotatably connected to the guide side rails and at least partially located between the two guide side rails, for conveying the box; and
a fourth driving member in driving connection to the conveying rollers.

Two ends of the conveying rollers are, respectively, rotatably provided on the two guide side rails, and the fourth driving member drives every conveying roller to rotate, thereby allowing for transportation of the box.

A second aspect of an embodiment of the present disclosure provides an assembly system for a battery, including:
a material conveying apparatus of any one of the above embodiments, for conveying a material for the battery for material taking;
an installation mechanism, for grabbing and installing the material; and
a manipulator, connected to the installation mechanism for adjusting a posture of the installation mechanism.

With the manipulator being connected to the installation mechanism: the installation mechanism can be moved to the material taking position of the material conveying apparatus, and this can cooperate with the installation mechanism to grab the material; the installation mechanism and the material can further be moved to a battery installation station, and this can cooperate with the installation mechanism to assemble the material.

In some implementations, the material is an explosion-proof valve, and the installation mechanism is a first installation mechanism, including a first connecting base, a first camera, a first clamping jaw assembly, and a tightening mechanism;
the first connecting base is used to connect to the manipulator;
the first camera is provided on the first connecting base for acquiring position information for the explosion-proof valve;
the first clamping jaw assembly is provided on the first connecting base for clamping the explosion-proof valve;
the tightening mechanism is provided on the first connecting base for tightening a screw to install the explosion-proof valve.

The first camera is used to acquire position information for the explosion-proof valve, thereby confirming a position of the explosion-proof valve. The first clamping jaw assembly clamps the explosion-proof valve that is in the material taking position, and the tightening mechanism is used to tighten and install the explosion-proof valve that is in an assembly position. In this way, clamping and installing of the explosion-proof valve is achieved.

In some implementations, there are two tightening mechanisms, the two tightening mechanisms are correspondingly provided on two sides of the first clamping jaw assembly, and a position of at least one of the tightening mechanisms relative to the other tightening mechanism can be adjusted.

By providing the two tightening mechanisms and allowing the two tightening mechanisms to be correspondingly provided on two sides of the first clamping jaw assembly, thereby screws on both sides of the explosion-proof valve can be tightened simultaneously, improving assembly efficiency. The position of at least one of the tightening mechanisms relative to the other tightening mechanism can be adjusted so as to adapt to explosion-proof valves of different sizes.

In some implementations, the first installation mechanism further includes:
a first spacing-changing mechanism, provided on the first connecting base and connected to the first clamping jaw assembly, for regulating a position of the first clamping jaw assembly at the first connecting base; and
a second spacing-changing mechanism, provided on the first connecting base with one of the tightening mechanisms fixedly connected to the first connecting base and with the other tightening mechanism movably connected to the first connecting base, allowing for regulation of the position under driving of the second spacing-changing mechanism.

With the first spacing-changing mechanism regulating the position of the first clamping jaw assembly relative to the first connecting base, the two tightening mechanisms can provide tightening and fixing for two sides of the explosion-proof valve without the first clamping jaw assembly loosening the explosion-proof valve.

In some implementations, the first clamping jaw assembly includes:
a first lifting assembly, provided on the first connecting base;
a clamping driving member, provided on the first lifting assembly and capable of being lifted up and down under driving of the first lifting assembly; and
two clamping jaws, provided on the clamping driving member and capable of moving to each other under the driving of the clamping driving member to clamp the explosion-proof valve, one end of the clamping jaw away from the clamping driving member being provided with an arc groove.

The first lifting assembly drives the clamping driving member and the clamping claws to be lifted down, the clamping driving member drives the two opposing clamping claws to move to each other so as to clamp the explosion-proof valve, the first lifting assembly drives the clamping driving member and the clamping claws to be lifted up until moving to the assembly position, and the first lifting assembly drives the clamping driving member and the clamping claws to be lifted down so as to install the explosion-proof valve. The stability of clamping is improved via adapting of an arc side wall of the arc groove to an arc side wall of the explosion-proof valve.

In some implementations, the material is a cable tie, and the installation mechanism is a second installation mechanism, including:
a second connecting base, for connecting to the manipulator;
a second camera, provided on the second connecting base for acquiring position information for the cable tie;
and a second clamping jaw assembly, provided on the second connecting base for clamping the cable tie.

The second camera is used to acquire the position information for the cable tie, thereby confirming a position of the cable tie. The second clamping jaw assembly clamps the cable tie that is in the material taking position or installs and releases the cable tie at the battery assembly position, thereby enabling clamping and installing of the cable tie.

A third aspect of an embodiment of the present disclosure provides a production line for a battery, including:
an assembly system of any one of the above embodiments; and
an installation stage, having an installation position for placing the battery, the manipulator being capable of moving the installation mechanism with the material to the installation position and adjusting a posture of the installation mechanism to assemble the material.

A fourth aspect of an embodiment of the present disclosure provides an assembly method for a battery, which is applied to an assembly system of any of the above embodiments, the assembly method including:
conveying, by the conveying mechanism, the material to the material taking position;
photographing, by the installation mechanism, the material to acquire position information for the material;
adjusting, by the manipulator, a position of the installation mechanism based on the position information;
grabbing, by the installation mechanism, the material, transferring to an installation station, and installing the material;
and handling, by the handling mechanism, the box to the transfer position after the material at the material taking position is completely taken.

In some implementations, the step of handling, by the handling mechanism, the box to the transfer position after the material at the material taking position is completely taken includes:
after the material in a tray at an upper level within the material frame of the box in the material taking position is completely taken, handling, by the handling mechanism, the empty tray at the upper level to the material frame in the transfer position;
after the trays within the material frame in the material taking position are all handled to the material frame in the transfer position, removing, by the conveying mechanism, the material frame in the transfer position off the transfer position; or, after there is only one empty tray within the material frame in the material taking position, removing, by the conveying mechanism, the material frame in the transfer position off the transfer position;
and handling, by the handling mechanism, the material frame that is in the material taking position to the transfer position.

### DESCRIPTION OF DRAWINGS

FIG. 1 is a structural schematic diagram of a material conveying apparatus according to one or more embodiments;
FIG. 2 is another structural schematic diagram of a material conveying apparatus according to one or more embodiments;
FIG. 3 is a structural schematic diagram of a part A of FIG. 2;
FIG. 4 is a structural schematic diagram of a part B of FIG. 2;
FIG. 5 is a structural schematic diagram of a part C of FIG. 2;
FIG. 6 is a structural schematic diagram of a handling mechanism of a material conveying apparatus according to one or more embodiments;
FIG. 7 is a partial structural schematic diagram of a handling mechanism of a material conveying apparatus according to one or more embodiments;
FIG. 8 is a structural schematic diagram of an assembly system according to one or more embodiments;
FIG. 9 is a structural schematic diagram of an installation mechanism of an assembly system according to one or more embodiments;
FIG. 10 is another structural schematic diagram of an installation mechanism of an assembly system according to one or more embodiments;
FIG. 11 is yet another structural schematic diagram of an installation mechanism of an assembly system according to one or more embodiments;
FIG. 12 is still another structural schematic diagram of an installation mechanism of an assembly system according to one or more embodiments;
FIG. 13 is a structural schematic diagram of a material as a cable tie according to one or more embodiments;
and FIG. 14 is a flow schematic diagram of an assembling method according to one or more embodiments.

### Description of reference numerals

Chassis 10; conveying mechanism 20; feeding channel 21; waiting position 21a; material taking position 21b; guide side rail 211; conveying roller 212; fourth driving member 213; discharging channel 22; transfer position 22a; removal position 22b; limiting mechanism 30; fixed limiting assembly 31; first limiting member 311; cushioning member 312; movable limiting assembly 32; first driving member 321; second limiting member 322; positioning assembly 33; second driving member 331; third limiting member 332; handling mechanism 40; transverse frame 41; stand column 411; cross beam 412; grabbing mechanism 42; base plate 421; first grabbing mechanism 422; connecting sliding rail 4221; connecting bracket 4222; suction cup 4223; second grabbing mechanism 423; clamping member 4231; hook portion 42311; connecting portion 42312; regulating member 4232; adjustment mechanism 43; traversing module 431; lifting module 432; second detection mechanism 44; first detection mechanism 50; photoelectric detection sensor 51; reflective plate 52; box 60; explosion-proof valve 70; cable tie 80; cable tie body 81; snap-fit portion 82;
material conveying apparatus 100; installation mechanism 200; first connecting base 201; first camera 202; first clamping jaw assembly 203; first lifting assembly 2031; clamping driving member 2032; clamping jaw 2033; arc groove 2033a; tightening mechanism 204; camera regulating module 205; guide column 2051; sliding sleeve 2052; first spacing-changing mechanism 206; second spacing-changing mechanism 207; second connecting base 201-1; second camera 202-1; second clamping jaw assembly 203-1; second lifting assembly 203-11; second clamping driving member 203-12; second clamping jaw 203-13; manipulator 300.

### DETAILED DESCRIPTION

Embodiments of the technical solutions of the present disclosure will be described in detail below in conjunction with the drawings. The following embodiments are only used to illustrate the technical solutions of the present disclosure more clearly, and are therefore used only as examples, and should not be used to limit the protection scope of the present disclosure.

Unless otherwise defined, all technical and scientific terms used herein have the same meaning as commonly understood by those skilled in the art belonging to the technical field of the present disclosure. The terms used herein are intended only for the purpose of describing a specific embodiment and are not intended to limit the present disclosure. The terms "includes, including, comprises, and comprising" and "has, have, and having" as well as any variations thereof of the present disclosure are intended to cover nonexclusive inclusion.

In the description of the embodiments of the present disclosure, the technical terms "first", "second", "third", and the like are used only to distinguish between different objects, and are not to be understood as indicating or implying a relative importance or implicitly specifying the number, particular sequence, or primary and secondary relation of the technical features indicated. In the description of the embodiments of the present disclosure, "a plurality of" means two or more, unless otherwise explicitly and specifically defined.

The reference to "embodiment" herein means that specific features, structures or characteristics described in connection with the embodiment may be contained in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present disclosure, the term "and/or" is only an association relationship for describing associated objects, indicating that three relationships may exist. For example, A and/or B may indicate three situations: A exists alone, both A and B exist, and B exists alone. Additionally, the character "/" herein generally indicates that the associated objects before and after it are in an "or" relationship.

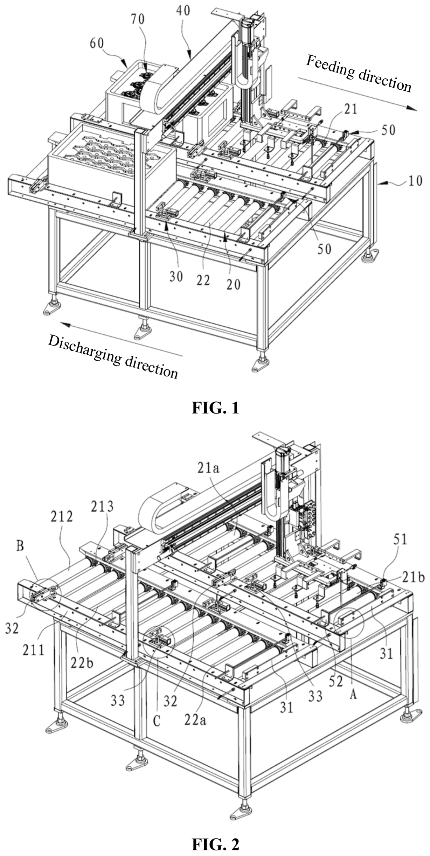

In the description of the embodiments of the present disclosure, the technical terms "feeding direction" and "discharging direction" are orientations or positional relationships based on those shown in the FIG. 1, and are intended only to facilitate and simplify the description of the embodiments of the present disclosure, and are not intended to indicate or imply that the apparatus or element referred to must have a particular orientation, or be constructed, operated, or used in a particular orientation, and therefore should not be construed as limitation of the embodiments of the present disclosure.

In the description of the embodiments of the present disclosure, unless otherwise explicitly specified and defined, the technical terms such as "install", "connected", "connection" and "fix" should be understood in a broad sense. For example, the connection may be fixed connection, detachable connection, or integrated connection, may be mechanical connection or electrical connection, or may be direct connection, indirect connection through an intermediate, internal communication between two elements, or interaction relationship between two elements. For those of ordinary skill in the art, the specific meanings of the above terms in the embodiments of the present disclosure can be understood according to specific situations.

In the description of the embodiments of the present disclosure, unless otherwise explicitly specified and defined, the technical term "contact" should be understood in a broad sense, which may be direct contact, or contact through an intermediate layer, or contact between two objects with little or no interaction force, or contact between two objects with an interaction force.

At present, new energy batteries are increasingly widely used in daily life and industry. New energy batteries are not only applied in energy storage power supply systems such as water power, fire power, wind power, and solar power stations, but also widely applied in electric transportation tools, such as electric bicycles, electric motorcycles and electric vehicles, as well as many fields such as aerospace. With continuous expansion of application fields of power batteries, the market demand therefor is also constantly expanding.

Battery assembly requires installation of a plurality of components, such as an explosion-proof valve, a cable tie, etc. In the related art, each component is conveyed to a pre-assembly position by a corresponding conveying structure and then assembled. Since the conveying structures for the components are different and cannot be universal, the conveying structures involved in battery assembly are diversified and complex, with high cost for design and manufacturing and management.

Based on the above considerations, for the material conveying apparatus provided by an embodiment of the present disclosure, a box carrying a material flows into the material conveying apparatus from a feeding channel, and the material is taken out at a material taking position of the feeding channel. The box unloaded is handled to a discharging channel by a handling mechanism, and the box unloaded is then removed from the discharging channel. The box carrying the material can be limited by a limiting mechanism that is in a waiting position of the feeding channel to control an inflow speed of the material. The box unloaded can be limited by a limiting mechanism that is in a removal position of the discharging channel, thereby controlling an outflow speed of the unloaded box. In this way, the material conveying apparatus provided by the embodiment of the present disclosure can be applicable to conveying lines for various materials and is of good versatility.

The solutions of the embodiments of the present disclosure may be applied to, but is not limited to, transportation of an explosion-proof valve for a battery and a cable tie for a battery. The explosion-proof valve may be a main explosion-proof valve for a battery or an explosion-proof valve for a battery module. The battery is assembled from one or more battery modules. The battery module is assembled from one or more battery cells. The cable tie may be used to fix elements such as a wiring harness or a busbar.

The battery cell refers to a basic unit that enables mutual conversion of chemical energy and electric energy, and may be used to make a battery module or a battery pack so as to power an electrical apparatus. The battery cell may be a secondary battery, and the secondary battery refers to a battery cell that can be used continually by activating an active material by means of charging after the battery cell is discharged. The battery cell may be a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickelcadmium battery, a lead storage battery, and the like, which is not limited in the embodiments of the present disclosure.

With reference to FIGS 1 to 7, an embodiment of the present disclosure provides a material conveying apparatus, including a chassis 10, a conveying mechanism 20, a limiting mechanism 30, and a handling mechanism 40.

With reference to FIG. 1, the conveying mechanism 20 includes two conveying channels provided on the chassis 10, one of the two conveying channels is a feeding channel 21 for conveying a box 60 carrying a material, and the other of the two conveying channels is a discharging channel 22 for conveying the box 60 that is unloaded.

With reference to FIGS 1 and 2, the limiting mechanism 30 is provided on the chassis 10 or the conveying mechanism 20, and is used to limit on the feeding channel 21 a waiting position 21a and a material taking position 21b arranged along a feeding direction, and to limit on the discharging channel 22 a transfer position 22a and a removal position 22b arranged along a discharging direction. The handling mechanism 40 is provided on the conveying mechanism 20 or the chassis 10, and is used to handle the box 60 located at the material taking position 21b to the transfer position 22a.

The chassis 10 is of a frame structure and can be provided on a ground to offer an installation base for other parts and components such as the conveying mechanism 20.

The conveying mechanism 20 is used to convey the box 60. The conveying mechanism 20 includes the feeding channel 21 and the discharging channel 22, the box 60 carrying a material flows in from the feeding channel 21, and the unloaded box 60 without the material flows out through the discharging channel 22.

With reference to FIGS. 1 and 2, the limiting mechanism 30 is provided on the chassis 10 or the conveying mechanism 20, that is, the limiting mechanism 30 may be installed on the chassis 10 or on a part of the conveying mechanism 20 that is fixed relative to the chassis 10. The limiting mechanism 30 is used to limit on the feeding channel 21 the waiting position 21a and the material taking position 21b arranged along the feeding direction. The feeding direction is a conveying direction of the feeding channel 21, that is, a conveying direction for the box 60 carrying the material. The feeding direction may be a linear conveying direction, may also be an arc conveying direction, and may further be a multi-segment linear conveying direction or a multi-segment arc conveying direction.

Along the feeding direction of the feeding channel 21, the limiting mechanism 30 can cooperate with the feeding channel 21 to form the waiting position 21a and the material taking position 21b that are arranged in sequence. The box 60 carrying the material is passed through the waiting position 21a and the material taking position 21b in sequence. During the operation, the box 60 carrying the material is limited at the waiting position 21a and cannot be conveyed further, thereby avoiding the above-mentioned box 60 directly flowing into the material taking position 21b and interfering with a box 60 that is in the material taking position 21b, while controlling the inflow speed of the material. The box 60 carrying the material enters the material taking position 21b and is limited by the limiting mechanism 30, and the material within the box 60 is taken out at the material taking position 21b.

The number of the waiting positions 21a and material taking positions 21b is not limited, and may be one or more to increase the taking speed.

The limiting mechanism 30 is used to limit on the discharging channel 22 the transfer position 22a and the removal position 22b arranged along the discharging direction. The discharging direction is a conveying direction of the discharging channel 22, that is, a conveying direction for a box 60 unloaded. The discharging direction may be a linear conveying direction, may also be an arc conveying direction, and may further be a multi-segment linear conveying direction or a multi-segment arc conveying direction.

Along the discharging direction of the discharging channel 22, the limiting mechanism 30 can cooperate with the discharging channel 22 to form the transfer position 22a and the removal position 22b that are arranged in sequence. The box 60 unloaded is thereby passed through the transfer position 22a and the removal position 22b. During the operation, the box 60 unloaded enters the discharging channel 22 at the transfer position 22a, and the limiting mechanism 30 is used to limit the box 60 unloaded to restrict it from directly flowing out of the transfer position 22a. The box 60 unloaded enters the removal position 22b from the transfer position 22a, and the limiting mechanism 30 limits the box 60 unloaded that is in the removal position 22b to control the outflow speed of the material.

The number of the transfer positions 22a and removal positions 22b is not limited, and may be one or more.

The handling mechanism 40 is provided on the conveying mechanism 20 or the chassis 10, and is used to handle the box 60 located at the material taking position 21b to the transfer position 22a. It is to be understood after all the material within a box 60 located in the material taking position 21b is taken out, it is required to transfer the box to facilitate a subsequent box 60 carrying the material to enter the material taking position 21b. The handling mechanism 40 handles the box 60 unloaded that is located at the material taking position 21b to the transfer position 22a.

In an embodiment of the present disclosure, the waiting position 21a is used to temporarily store a material so as to supply the material to the material taking position 21b. The box 60 carrying a material flows in from the feeding channel 21, is, before entering the material taking position 21b, limited at the waiting position 21a by the limiting mechanism 30 that is in the waiting position 21a to control a material inflow speed, flows into the material taking position 21b after limiting is released, and is limited at the material taking position 21b by the limiting mechanism 30 that is in the material taking position 21b to facilitate removal of the material. After the material within the box 60 in the material taking position 21b is entirely removed, limiting is released, and the box 60 unloaded is handled to the transfer position 22a on the discharging channel 22 by the handling mechanism 40, and is limited by the limiting mechanism 30 that is in the transfer position 22a. After limiting is released, the box flows into the removal position 22b, is limited by the limiting mechanism 30 that is in the removal position 22b, thereby controlling the material outflow speed, and flows out of the discharging channel 22 after limiting is released. Various materials for battery assembly may be loaded into the box 60 and conveyed by the material conveying apparatus, so the material conveying apparatus is highly versatile.

The feeding channel 21 and the discharging channel 22 may be arranged at any angle as the site and assembly require.

Exemplarily, with reference to FIG. 1, the feeding channel 21 and the discharging channel 22 are provided side by side on the chassis 10, and both the feeding channel 21 and the discharging channel 22 are linear channels, with the feeding direction opposite the discharging direction.

The side-by-side provision means that the feeding channel 21 and the discharging channel 22 are arranged in parallel and are at least partially aligned along a direction perpendicular to an extension direction of the conveying channel.

In this way, a position where the box 60 enters the feeding channel 21 and a position where the box 60 flows out of the discharging channel 22 are on the same side of the chassis 10, reducing a distance between the position where the box 60 enters the feeding channel 21 and the position where the box 60 flows out of the discharging channel 22, thereby facilitating transportation of the box 60.

With reference to FIG. 2. relative positions of the waiting position 21a and the removal position 22b are not limited, for example, arranged in partially or completely staggered manner along the direction perpendicular to the extension direction of the conveying channel. Relative positions of the material taking position 21b and the transfer position 22a are not limited, for example, arranged in partially or completely staggered manner along the direction perpendicular to the extension direction of the conveying channel.

Exemplarily, the waiting position 21a and the removal position 22b are aligned along the direction perpendicular to the extension direction of the conveying channel, the waiting position 21a and the removal position 22b forming a first row of regions. The material taking position 21b and the transfer position 22a are aligned along a direction perpendicular to the extension direction of the conveying channel, the material taking position 21b and the transfer position 22a forming a second row of regions. The handling mechanism 40 is provided between the first row of regions and the second row of regions.

The waiting position 21a and the removal position 22b are aligned along the direction perpendicular to the extension direction of the conveying channel, that is, projections of the waiting position 21a and the removal position 22b along a direction perpendicular to the extension direction of the conveying channel can overlap.

By aligning the material taking position 21b and the transfer position 22a along the direction perpendicular to the extension direction of the conveying channel, a path between the material taking position 21b and the transfer position 22a is shortened, enabling improvement in the efficiency of the handling mechanism 40 in handling the box 60.

The handling mechanism 40 is provided between the first row of regions and the second row of regions, allowing the handling mechanism 40 to avoid a manipulator that grabs the material in the box 60 in the material taking position 21b.

Exemplarily, with reference to FIG. 2, the limiting mechanism 30 includes fixed limiting assemblies 31 and movable limiting assemblies 32. The fixed limiting assemblies 31 can limit the box 60 and are, respectively, provided on a side of the material taking position 21b away from the waiting position 21a and a side of the transfer position 22a away from the removal position 22b. The movable limiting assemblies 32 can limit or avoid the box 60 and are, respectively, provided on a side of the waiting position 21a close to the material taking position 21b and a side of the removal position 22b away from the transfer position 22a.

The fixed limiting assemblies 31 can limit the box 60, that is, can limit a relative movement between the box 60 and the chassis 10. The fixed limiting assembly 31 is provided on the side of the material taking position 21b away from the waiting position 21a. That is, it is provided on the downstream side of the material taking position 21b along the feeding direction, thereby avoiding the box 60 being removed off the feeding channel 21. The fixed limiting assembly 31 is provided on the side of the transfer position 22a away from the removal position 22b. That is, it is provided on the upstream side of the transfer position 22a along the discharging direction, thereby avoiding the box 60 being removed off the discharging channel 22.

The movable limiting assemblies 32 are limiting assemblies that are at least partially movable relative to the chassis 10. The movable limiting assemblies 32 can limit or avoid the box 60, that is, the movable limiting assemblies 32 can limit the movement of the box 60 relative to the chassis 10, or retreat so as not to hinder the movement of the box 60, thereby controlling the inflow or outflow speed of the material.

Specifically, the box 60 enters the feeding channel 21, and the movable limiting assembly limits the box 60 to allow the box 60 to be in the waiting position 21a. When the box 60 flows from the waiting position 21a into the material taking position 21b , the movable limiting assembly avoids the box 60 so as not to hinder the movement of the box 60. Similarly, the box 60 enters the discharging channel 22, and after the box 60 enters the removal position 22b, the movable limiting assembly can limit the box 60 to restrict the box 60 to the removal position 22b. When the box 60 flows out of the discharging channel 22 from the removal position 22b, the movable limiting assembly avoids the box 60 so as not to hinder the movement of the box 60.

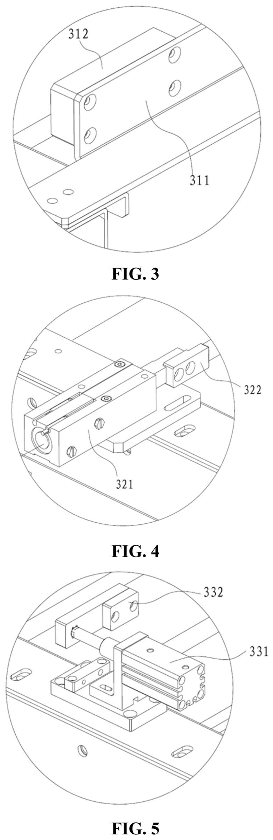

Exemplarily, with reference to FIG. 3, the fixed limiting assembly 31 includes a first limiting member 311 and a cushioning member 312, the cushioning member 312 is provided on a side of the first limiting member 311 facing the box 60 for the purpose of contact with the box 60.

The cushioning member 312 is used to reduce an impact force at the time of the box 60 being limited, thereby reducing a vibration caused to the material inside the box 60 during limiting, and reducing damage to the box 60 during a collision.

The cushioning member 312 may be made of an elastic material such as rubber or plastic. The number of the cushioning members 312 is not limited, for example, two cushioning members are provided at two ends of the first limiting member 311 in its length direction.

The first limiting member 311 is used to support the cushioning member 312 to avoid limiting being affected due to the cushioning member 312 is displaced during limiting. The first limiting member 311 may be fixed on the chassis 10, thereby transmit impact to the chassis 10.

In some embodiments, the first limiting member 311 is a plate, and the cushioning members 312 are rectangular blocks, provided at two ends of the first limiting member 311 and fasten connected to the first limiting member via screws.

Exemplarily, with reference to FIG. 4, the movable limiting assembly 32 includes a first driving member 321 and a second limiting member 322, the first driving member 321 being in driving connection to the second limiting member 322. The first driving member 321 can drive the second limiting member 322 to extend so as to limit the box 60. The first driving member 321 can drive the second limiting member 322 to retract so as to avoid the box 60.

The first driving member 321 may be a pneumatic cylinder or an electric cylinder, and has a telescoping function.

The second limiting member 322 is provided on the telescoping structure of the first driving member 321, whereby the first driving member 321 can drive the second limiting member 322 to extend or retract.

With the box 60 being limited by the first driving member 321 driving the second limiting member 322 to extend, and limiting of the box 60 being released by the first driving member 321 driving the second limiting member 322 to retract, avoidance of the box 60 is achieved.

In some embodiments, the first driving member 321 is fixed onto the chassis 10 or the conveying mechanism 20, and an extension direction of the first driving member 321 is perpendicular to the conveying direction, thereby decreasing a movement stroke of the first driving member with respect to extending or retracting.

Exemplarily, with reference to FIG. 2, the limiting mechanism 30 further includes positioning assemblies 33. The positioning assemblies 33 can position or avoid the box 60. The positioning assemblies 33 are, respectively, provided on a side of the material taking position 21b close to the waiting position 21a and a side of the transfer position 22a close to the removal position 22b, for the purpose of applying to the box 60 an acting force toward the corresponding fixed limiting assembly 31 to position the box 60.

It is to be understood that, in the feeding channel 21, the positioning assemblies 33 can avoid the box 60 so as not to hinder the movement of the box 60 when the box 60 flows from the waiting position 21a into the material taking position 21b. After the box 60 enters the material taking position 21b, the positioning assembly 33 applies to the box 60 an acting force towards the corresponding fixed limiting assembly 31. In this way, the positioning assembly 33 cooperates with the fixed limiting assembly 31 to position the box 60.

In the discharging channel 22, after the box 60 enters the transfer position 22a, the positioning assembly 33 applies to the box 60 an acting force towards the corresponding fixed limiting assembly 31. In this way, the positioning assembly 33 cooperates with the fixed limiting assembly 31 to position a location of the box 60 at the transfer position 22a. The positioning assemblies 33 can avoid the box 60 so as not to hinder the movement of the box 60 when the box 60 moves from the transfer position 22a to the removal position 22b.

By the positioning assembly 33 applying to the box 60 the acting force toward the corresponding fixed limiting assembly 31 to position the boxes 60 that are in the material taking position 21b and the transfer position 22a, it is convenient for the manipulator to acquire the material in the box 60 that is in the material taking position 21b.

Exemplarily, with reference to FIG. 5, the positioning assembly 33 includes a second driving member 331 and a third limiting member 332, the second driving member 331 being in driving connection to the third limiting member 332. The second driving member 331 can drive the third limiting member 332 to revolve into a moving path of the box 60, and to retract for applying an acting force to the box 60. The second driving member 331 can drive the third limiting member 332 to extend for releasing the application of the acting force to the box, and to revolve out of the moving path of the box so as to avoid the box 60.

The second driving member 331 can drive the third limiting member 332 to revolve forwardly or reversely, thereby allowing the third limiting member 332 to enter the moving path of the box 60 or exit the moving path of the box 60. The second driving member 331 can also drive the third limiting member 332 to move toward the corresponding fixed limiting assembly 31 to apply an acting force to the box 60 for positioning the box 60, or to move away from the corresponding fixed limiting assembly 31 to release positioning of the box 60.

The third limiting member 332 may be of a block structure, eccentrically provided on a revolution axis of the second driving member 331, and a revolution plane of the third limiting member 332 is perpendicular to the conveying direction, thereby enabling a rotating-out or rotating-in function under driving of the second driving member 331.

In this way, the second driving member 331 is allowed to drive the third limiting member 332 to revolve into the moving path of the box 60, and to retract for applying the acting force to the box 60, thus cooperating with the corresponding fixed limiting assembly 31 to achieve positioning of the box 60.

The second driving member 331 is allowed to drive the third limiting member 332 to extend for releasing the application of the acting force to the box 60, and to revolve out of the moving path of the box 60, thereby achieving avoidance of the box 60.

Exemplarily, with reference to FIG. 1, the material conveying apparatus further includes a plurality of first detection mechanisms 50 that are used, respectively, to detect whether the box 60 is present in the waiting position 21a, the material taking position 21b, the transfer position 22a, and the removal position 22b.

The first detection mechanism 50 is used to detect whether the box 60 is present, and trigger a subsequent corresponding assembly action after detecting the box 60. In some embodiments, with reference to FIG. 2, the first detection mechanism 50 includes a photoelectric detection sensor 51 and a reflective plate 52, and the photoelectric detection sensor 51 and the reflective plate 52 are, respectively, arranged on both sides of the conveying direction for the box 60. When light emitted by the photoelectric detection sensor 51 is blocked by the box 60, the light reflected into the photoelectric detection sensor 51 changes, and thereby the presence of the box 60 is sensed. The light emitted by the photoelectric detection sensor 51 is schematically drawn in both FIGS. 1 and 2.

Specifically, when the first detection mechanism 50 that is in the material taking position 21b obtains a detection signal for the box 60, the aforementioned detection signal can be used to trigger the positioning assemblies 33 to position the box 60 that is in the material taking position 21b, and can be used to trigger control for a taking action of the manipulator outside.

When the first detection mechanism 50 that is in the waiting position 21a obtains a detection signal for the box 60, the aforementioned detection signal is used to trigger the movable limiting assemblies 32 to limit the box 60 that is in the waiting position 21a.

When the first detection mechanism 50 that is in the transfer position 22a obtains a detection signal for the box 60, the aforementioned detection signal is used to trigger the positioning assemblies 33 to position the box 60 that is in the transfer position 22a.

When the first detection mechanism 50 that is in the removal position 22b obtains a detection signal for the box 60, the aforementioned detection signal is used to trigger the movable limiting assemblies 32 to limit the box 60 that is in the removal position 22b.

Exemplarily, with reference to FIG. 2, the conveying channel includes two guide side rails 211 provided in spaced manner, a plurality of conveying rollers 212, and a fourth driving member 213. The two guide side rails 211 provided in spaced manner are provided on the chassis 10. The plurality of conveying rollers 212 are rotatably connected to the guide side rails 211 and at least partially located between the two guide side rails 211, for conveying the box 60. The fourth driving member 213 in driving connection to the conveying rollers 212.

The two guide side rails 211 are used to install the conveying rollers 212. Every guide side rail 211 is provided on the chassis 10, thereby maintaining its own structural stability.

Two ends of the conveying rollers 212 are, respectively, rotatably provided on the two guide side rails 211. The conveying rollers 212 are provided in spaced manner along a length direction of the guide side rails 211, and the tops of the conveying rollers 212 are at a same height.

The fourth driving member 213 drives the conveying rollers 212 to rotate. The structure of the fourth driving member 213 is not limited. In some embodiments, the fourth driving member 213 includes a sprocket, a chain, and a sprocket driving member, there are a plurality of sprockets provided, each sprocket is connected to the conveying roller 212, the sprocket driving member is in transmission connection to one sprocket, and every sprocket is meshed with the chain for motion transmission.

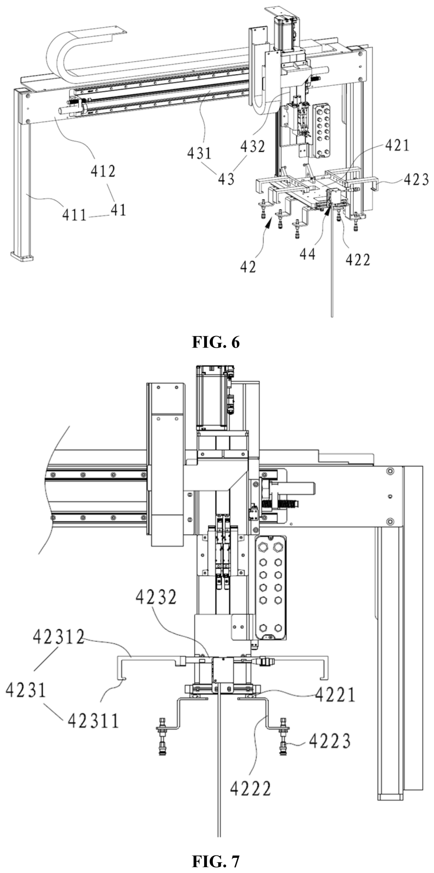

Exemplarily, with reference to FIG. 6, the handling mechanism 40 includes a transverse frame 41, a grabbing mechanism 42, an adjustment mechanism 43, and a second detection mechanism 44. The transverse frame 41 is provided on the conveying mechanism 20 or the chassis 10. The grabbing mechanism 42 is used to grab the box 60. The adjustment mechanism 43 is provided on the transverse frame 41 and connected to the grabbing mechanism 42 for adjusting a position of the grabbing mechanism 42. The second detection mechanism 44 is provided on the grabbing mechanism 42 or the transverse frame 41, and is used to detect a height of a tray of the box.

The transverse frame 41 serves as an installation base for the adjustment mechanism 43. The transverse frame 41 can span the feeding channel 21 and the discharging channel 22. In some embodiments, the transverse frame 41 includes a stand column 411 and a cross beam 412, there are two stand columns 411 provided, the cross beam 412 connects upper ends of the two stand columns 411, and lower ends of the stand columns 411 are connected to the conveying mechanism 20 or the chassis 10.

The adjustment mechanism 43 is provided on the transverse frame 41 and connected to the grabbing mechanism 42 for adjusting the position of the grabbing mechanism 42. That is, the adjustment mechanism 43 can move the grabbing mechanism 42 from the material taking position 21b to the transfer position 22a , or from the transfer position 22a to the material taking position 21b. The adjustment mechanism 43 may be a servo motor moving module to achieve reciprocating linear motion through servo motor driving.

In some embodiments, the adjustment mechanism 43 includes a traversing module 431 and a lifting module 432 provided on the traversing module 431, the grabbing mechanism 42 is provided on the lifting module 432 and is driven to be lifted up and down by the lifting module 432, and the traversing module 431 drives the lifting module 432 to reciprocate between the material taking position 21b and the transfer position 22a along with the grabbing mechanism 42.

The grabbing mechanism 42 is used to grab or release the box 60. Specifically, the grabbing mechanism 42 grabs the box 60 at the material taking position 21b and releases the box 60 at the transfer position 22a.

The second detection mechanism 44 is used to detect the height of the tray of the box 60. According to height information of the tray detected by the second detection mechanism 44, a height of the first grabbing mechanism 422 is adjusted to accurately grab the tray.

The box 60 may be formed by stacking a plurality of trays, each tray having a storage position for storing a material. In some embodiments, the box 60 includes trays and a material frame. The tray has a storage position for storing a material. A plurality of trays are stacked with one above another in the material frame. In the box 60 that carries a material, the material frame has trays stacked with one above another therewithin , and the material is placed in a storage position of each tray. In the box 60 unloaded, the material frame has trays stacked with one above another therewithin, and a storage position of every tray is empty.

The following illustration is made by taking the box 60 including the material frame and the trays as an example.

Exemplarily, with reference to FIG. 6 and FIG. 7, the grabbing mechanism 42 includes a base plate 421, a first grabbing mechanism 422, and a second grabbing mechanism 423. Light emitted by the second detection mechanism 44 is schematically drawn in both FIGS. 6 and 7.

The base plate 421 is connected to the adjustment mechanism 43. The first grabbing mechanism 422 is used to grab the tray of the box 60. The second grabbing mechanism 423 is used to grab the material frame of the box 60, both the first grabbing mechanism 422 and the second grabbing mechanism 423 are provided on the base plate 421, and the second grabbing mechanism 423 is located above the first grabbing mechanism 422.

The base plate 421 is provided at the adjustment mechanism 43 and can be driven by the adjustment mechanism 43 to reciprocate between the material taking position 21b and the transfer position 22a. Both the first grabbing mechanism 422 and the second grabbing mechanism 423 are provided on the base plate 421.

During working, after all the material on the top tray that is in the material taking position 21b is grabbed, the first grabbing mechanism 422 grabs the unloaded tray and moves it to the transfer position 22a. The cycle continues, until all the material in the box 60 that is in the material taking position 21b is grabbed. The box loaded with the empty trays that is in the transfer position 22a is conveyed away, and the material frame is grabbed by the second grabbing mechanism 423 to the transfer position 22a.

It is to be understood that the positioning assembly 33 that is in the transfer position 22a can position the material frame, such that the material frame is rarely displaced, thereby facilitating accurate placement of the tray.

The second grabbing mechanism 423 is located above the first grabbing mechanism 422. In this way, when the first grabbing mechanism 422 grabs the tray of the box 60, the second grabbing mechanism 423 located above the first grabbing mechanism is not prone to interfering with the material frame of the box 60.

A spacing between the first grabbing mechanism 422 and the second grabbing mechanism 423 in a height direction may be adjusted according to a depth of the material frame.

Exemplarily, with reference to FIG. 7, the first grabbing mechanism 422 includes two connecting sliding rails 4221, a plurality of connecting brackets 4222, and a suction cup 4223.

The two connecting sliding rails 4221 are provided in a spaced manner on the base plate 421. The plurality of connecting brackets 4222 have an elongated hole with an extension direction perpendicular to the connecting sliding rail 4221, the connecting bracket 4222 being fasten connected to the connecting sliding rail 4221 via the elongated hole. Each of the connecting brackets 4222 is provided with the suction cup 4223 thereon for sucking the tray.

The connecting sliding rail 4221 is a bar track, and the connecting bracket 4222 is fasten connected to the connecting sliding rail 4221. After fastening is released, the connecting bracket 4222 can adjust its position along a length extension direction of the connecting sliding rail 4221, thereby adjusting a position of the connecting bracket 4222 and a position of the suction cup 4223 to adapt to trays with different storage position arrangements.

The plurality of connecting brackets 4222 have the elongated hole, and the connecting bracket 4222 being fasten connected to the connecting sliding rail 4221 via the elongated hole. In this way, the connecting bracket 4222 enables the connecting bracket 4222 to adjust a relative position to the connecting sliding rail 4221 along the extension direction of the elongated hole, that is, adjust the position of the suction cup 4223 along the extension direction of the elongated hole.

It may be understood that the suction cup 4223 is regulated in an extension range of the elongated hole and the connecting sliding rail 4221. By allowing the extension direction of the elongated hole to be perpendicular to the connecting sliding rail 4221, a regulation range can be increased with the elongated hole and the connecting sliding rail 4221 being constant in length.

The suction cup 4223 is used for sucking the tray. For example, by connecting to an external negative pressure device, a negative pressure is thereby offered to suck the tray. In some embodiments, the suction cup 4223 may telescope along its own length direction, thereby absorbing tolerances and flexibly contacting the tray.

In some embodiments, the plurality of connecting brackets 4222 are fastened to the two connecting sliding rails 4221 separately. The connecting bracket 4222 is a bent plate having two horizontal connecting portions and a vertical connecting portion connecting the two horizontal connecting portions, where one horizontal connecting portion is connected to the connecting sliding rail 4221, and the other horizontal connecting portion is located below the one horizontal connecting portion for fixed connection with the suction cup 4223.

Exemplarily, the second grabbing mechanism 423 includes a clamping member 4231 and a regulating member 4232. The clamping member 4231 is used to clamp the material frame. The regulating member 4232 is provided on the base plate 421, two ends of the regulating member 4232 being, respectively, connected to two clamping members 4231 to regulate a distance for the clamping members 4231.

The regulating member 4232 can regulate the distance for the two clamping members 4231, that is, the regulating member 4232 can drive the two clamping members 4231 to move to each other or move away from each other. The regulating member 4232 may be an electrically driven telescopic rod.

The specific structure of the clamping member 4231 is not limited. In some embodiments, an outer wall of the material frame has an inwardly recessed groove, the clamping member 4231 includes a hook portion 42311 and a connecting portion 42312, the hook portion 42311 is connected to the connecting portion 42312, and the connecting portion 42312 is connected to the regulating member 4232. In this way, when the second grabbing mechanism 423 is in a position of grabbing the material frame, through the regulating member 4232 driving the hook portions 42311 of the two clamping members 4231 to move horizontally to each other until part of the hook portions 42311 of the two clamping members 4231 extends into the groove of the outer wall of the material frame, therefore, this part abuts against a side wall of the groove to offer a supporting force lifting up the material frame when the second grasping mechanism 423 is lifted up. Upon separation from the material frame, the regulating member 4232 drives the hook portions 42311 of the two clamping members 4231 to move horizontally away from each other.

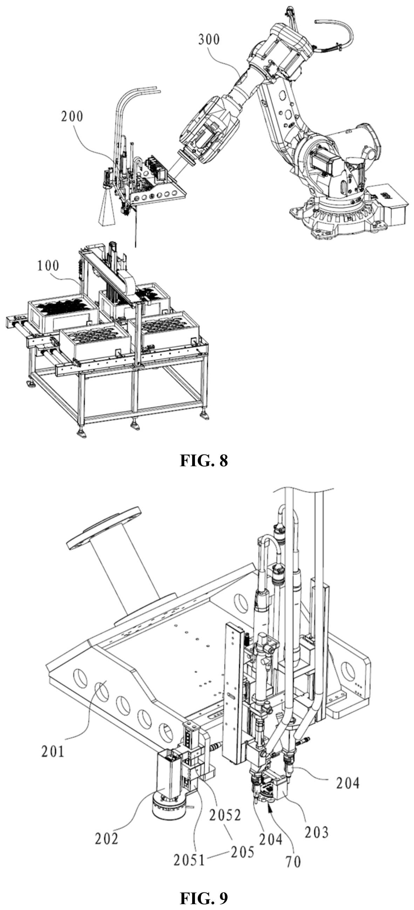

With reference to FIGS. 8 to 12, an embodiment of the present disclosure further provides an assembly system for a battery, including a material conveying apparatus 100 of any of the above solutions, an installation mechanism 200, and a manipulator 300.

With reference to FIG. 8, the material conveying apparatus 100 is used to convey a material for the battery for material taking. The installation mechanism 200 is used for grabbing and installing the material. The manipulator 300 is connected to the installation mechanism 200 for adjusting a posture of the installation mechanism 200.

The battery is applicable to various electrical devices using a battery, such as mobile phones, portable devices, laptops, battery vehicles, electric toys, electric tools, electric vehicles, ships, spacecrafts, and the like. For example, the spacecrafts include airplanes, rockets, space shuttles, spaceships, etc., and the battery is used to provide electric energy for the above electrical devices.

The installation mechanism 200 is used for grabbing and installing the material. That is, the installation mechanism 200 can grab the material at the material taking position 21b of the material conveying apparatus 100 and assemble the material onto the battery.

The manipulator 300 is connected to the installation mechanism 200, and the installation mechanism 200 can be moved to the material taking position 21b of the material conveying apparatus 100, allowing for cooperation with the installation mechanism 200 to grab the material; or the installation mechanism 200 can be moved to a battery installation station, allowing for cooperation with the installation mechanism 200 to assemble the material.

In some embodiments, the material is an explosion-proof valve 70. With reference to FIG. 9, the installation mechanism 200 is a first installation mechanism, including a first connecting base 201, a first camera 202, a first clamping jaw assembly 203, and a tightening mechanism 204.

The first connecting base 201 is used to connect to the manipulator 300. The first camera 202 is provided on the first connecting base 201 for acquiring position information for the explosion-proof valve 70. The first clamping jaw assembly 203 is provided on the first connecting base 201 for clamping the explosion-proof valve 70. The tightening mechanism 204 is provided on the first connecting base 201 for tightening a screw to install the explosion-proof valve 70.

The explosion-proof valve 70 may be a main explosion-proof valve for a battery or an explosion-proof valve for a battery module. One or more battery modules are assembled to form the battery. One or more battery cells are assembled to form the battery module.

The first connecting base 201 is connected to the manipulator 300 and is used to provide an installation base for the first camera 202, the first clamping jaw assembly 203, and the tightening mechanism 204.

The first camera 202 is used to acquire position information for the material. Specifically, when the installation mechanism 200 is in the material taking position 21b, the first camera 202 can perform photographing to acquire position information for the explosion-proof valve 70, and the aforementioned position information is used to adjust the position of the first clamping jaw assembly 203 to accurately clamp the explosion-proof valve 70. When the installation mechanism 200 is in a battery assembly position, the first camera 202 can perform photographing to acquire assembly environment information, thereby confirming an installation region for the explosion-proof valve 70.

In some embodiments, the position of the first camera 202 relative to the first connecting base 201 can be adjusted vertically. Specifically, the first installation mechanism includes a camera regulating module 205, the camera regulating module 205 includes a guide column 2051 with a scale and a sliding sleeve 2052 that sleeves the guide column, and the sliding sleeve 2052 is connected to the first camera 202 and fastened to the guide column 2051. The guide column 2051 is fixed to the first connecting base 201. After the sliding sleeve 2052 is released from being fastened, the sliding sleeve 2052 and the first camera 202 can move along the guide column 2051 to adjust their positions. The scale is used to confirm a regulated height of the first camera 202 to accommodate to different first cameras 202.

The first clamping jaw assembly 203 is used to clamp the explosion-proof valve 70. The structure of the first clamping jaw assembly 203 is not limited.

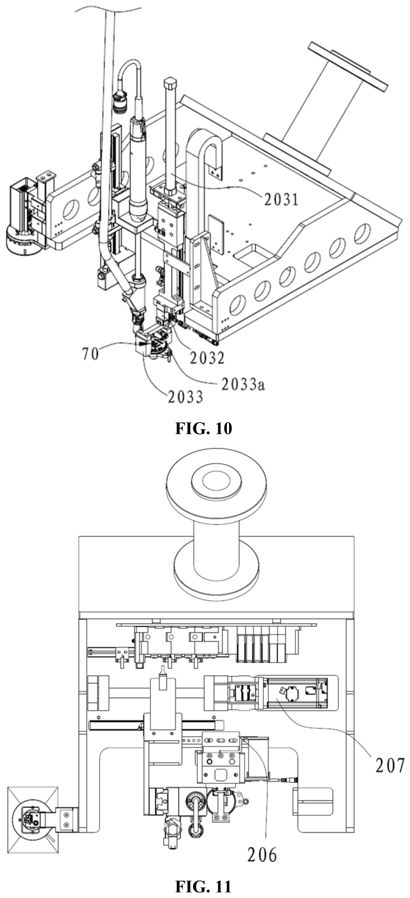

In some embodiments, with reference to FIG. 10, the first clamping jaw assembly 203 includes a first lifting assembly 2031, a clamping driving member 2032, and two clamping jaws 2033.

The first lifting assembly 2031 is provided on the first connecting base 201. The clamping driving member 2032 is provided on the first lifting assembly 2031 and capable of being lifted up and down under driving of the first lifting assembly 2031. The two clamping jaws 2033 are provided on the clamping driving member 2032 and capable of moving to each other under the driving of the clamping driving member 2032 to clamp the explosion-proof valve 70, one end of the clamping jaw 2033 away from the clamping driving member 2032 being provided with an arc groove 2033a.

The first lifting assembly 2031 is used to drive the clamping driving member 2032 and the clamping claws 2033 to be lifted up and down. The first lifting assembly 2031 may be an electric cylinder or a pneumatic cylinder.

The clamping driving member 2032 drives the two opposing clamping jaws 2033 to move to each other or move away from each other, thereby clamping the explosion-proof valve 70 or loosening the explosion-proof valve 70. The clamping driving member 2032 may be an electric cylinder or a pneumatic cylinder.

The end of the clamping jaw 2033 away from the clamping driving member 2032 is provided with the arc groove 2033a, and the arc groove 2033a is used to adapt to the explosion-proof valve 70. Specifically, the explosion-proof valve 70 has a circular upper end face, and the stability of clamping is improved via adapting of an arc side wall of the arc groove 2033a to an arc side wall of the explosion-proof valve 70. With a bottom face of the arc groove 2033a abutting against the upper end face of the explosion-proof valve 70, clamping depth of the explosion-proof valve 70 is effectively controlled, thereby improving subsequent assembly precision.

The number of tightening mechanisms 204 is not limited, and may be one, or multiple as needed to improve assembly efficiency.

In some embodiments, there are two tightening mechanisms 204, the two tightening mechanisms 204 are correspondingly provided on two sides of the first clamping jaw assembly 203, and a position of at least one of the tightening mechanisms 204 relative to the other tightening mechanism 204 can be adjusted.

By providing the two tightening mechanisms 204 and allowing the two tightening mechanisms 204 to be correspondingly provided on two sides of the first clamping jaw assembly 203, thereby screws on both sides of the explosion-proof valve 70 can be tightened simultaneously, improving assembly efficiency.

The position of at least one of the tightening mechanisms 204 relative to the other tightening mechanism 204 can be adjusted, that is, the position of one tightening mechanism 204 can be adjusted. Both tightening mechanisms 204 may be adjusted as well. The position of at least one of the tightening mechanisms 204 relative to the other tightening mechanism 204 can be adjusted so as to adapt to explosion-proof valves 70 of different sizes.

It may be understood that through holes in the explosion-proof valve 70 for bolts to pass through are arranged symmetrically. When the position of one of the tightening mechanisms 204 is adjusted, the relative positions of the two tightening mechanisms 204 can adapt to the sizes of different explosion-proof valves 70. However, since the position of the first clamping jaw assembly 203 remains unchanged, that is, the position of the explosion-proof valve 70 remains unchanged, the two tightening mechanisms 204 adjusted cannot be directly aligned with the through holes in the explosion-proof valve 70. It is required to first adjust the position relative to the explosion-proof valve 70 before a screw tightening action can be implemented, which reduces the action efficiency and also affects the positioning of the explosion-proof valve 70.

In this regard, in some embodiments, with reference to FIG. 10 and FIG. 11, the first installation mechanism further includes a first spacing-changing mechanism 206 and a second spacing-changing mechanism 207.

The first spacing-changing mechanism 206 is provided on the first connecting base 201 and connected to the first clamping jaw assembly 203, for regulating the position of the first clamping jaw assembly 203 on the first connecting base 201.

The second spacing-changing mechanism 207 is provided on the first connecting base 201 with one of the tightening mechanisms 204 fixedly connected to the first connecting base 201 and with the other tightening mechanism 204 movably connected to the first connecting base 201, allowing for regulation of the position under driving of the second spacing-changing mechanism 207.

The first spacing-changing mechanism 206 may be a spacing-changing installation plate having a slotted hole, and the spacing-changing installation plate is fastened to the first connecting base 201 via the elongated hole. The first clamping jaw assembly 203 is installed on the spacing-changing installation plate. By untightening screws of the spacing-changing installation plate, the position of the spacing-changing installation plate between the two tightening mechanisms 204 can be adjusted.

The second spacing-changing mechanism 207 may be a servo motor lead screw driving module, and a lead screw is driven to revolve by a servo motor, such that a lead screw nut and a slider slide along a guide rail, thereby bringing the tightening mechanism 204 connected to the slider to achieve its position regulation.

With the first spacing-changing mechanism 206 regulating the position of the first clamping jaw assembly 203 relative to the first connecting base 201, that is, regulating the position of the tightening mechanism 204, fixedly connected to the first connecting base 201, relative to the first clamping jaw assembly 203, the two tightening mechanisms 204 can, therefore, provide tightening and fixing for two sides of the explosion-proof valve 70 without the first clamping jaw assembly 203 loosening the explosion-proof valve 70.

In case screw tightening is required, the tightening mechanism 204 drives one end with a screw to descend to a preset height, aligning the screw with the through hole in the explosion-proof valve 70 and tightening in the screw for fixing.

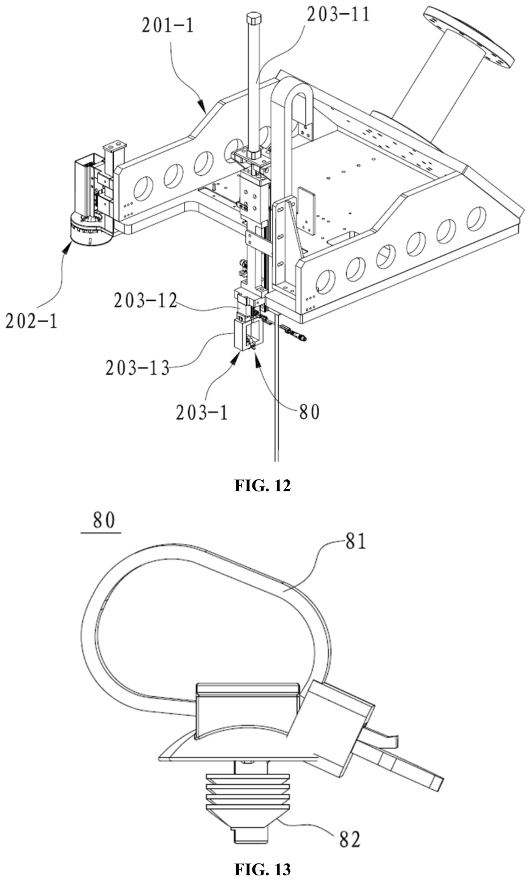

In some embodiments, the material is a cable tie 80. With reference to FIG. 12, the installation mechanism 200 is a second installation mechanism, including a second connecting base 201-1, a second camera 202-1, and a second clamping jaw assembly 203-1.

The second connecting base 201-1 is used to connect to the manipulator 300. The second camera 202-1 is provided on the second connecting base 201-1 for acquiring position information for the cable tie 80. The second clamping jaw assembly 203-1 is provided on the second connecting base 201-1 for clamping the cable tie 80.

With reference to FIG. 13, the cable tie 80 may be used to fix elements such as a wiring harness or a busbar, and include a cable tie body 81 and a snap-fit portion 82 connected to the bottom of the cable tie body 81. The snap-fit portion 82 is used to snap into a through hole location on a battery pack, thereby fixing the cable tie 80. The cable tie body 81 is used to bind a wiring harness within the battery pack.

The second connecting base 201-1 is connected to the manipulator 300 and is used to provide an installation base for the second camera 202-1 and the second clamping jaw assembly 203-1.

The second camera 202-1 is used to acquire the position information for the cable tie 80. Specifically, when the installation mechanism 200 is in the material taking position 21b, the second camera 202-1 can perform photographing to acquire the position information for the cable tie 80, and the aforementioned position information is used to adjust the position of the second clamping jaw assembly 203-1 to accurately clamp the cable tie 80. When the installation mechanism 200 is in the battery assembly position, the second camera 202-1 can perform photographing to acquire assembly environment information, thereby confirming an installation region for the cable tie 80.

In some embodiments, the position of the second camera 202-1 relative to the second connecting base 201-1 can be adjusted vertically. For the specific structure, reference is made to the camera regulating module 205 of the first camera 202.

The second clamping jaw assembly 203-1 is used to clamp the cable tie 80. The structure of the second clamping jaw assembly 203-1 is not limited.

In some embodiments, the second clamping jaw assembly 203-1 includes a second lifting assembly 203-11, a second clamping driving member 203-12, and two second clamping jaws 203-13.

The second lifting assembly 203-11 is provided on the second connecting base 201-1. The second clamping driving member 203-12 is provided on the second lifting assembly 203-11 and capable of being lifted up and down under driving of the second lifting assembly 203-11. The two second clamping jaws 203-13 are provided on the second clamping driving member 203-12 and capable of moving to each other under the driving of the second clamping driving member 203-12 to clamp the cable tie 80.

An embodiment of the present disclosure further provides a production line for a battery, including an assembly apparatus of any one of the above embodiments and an installation stage. The installation stage has an installation position for placing a battery to be installed, the manipulator 300 is capable of moving the installation mechanism 200 with the material to the installation position and adjusting the posture of the installation mechanism 200 to assemble the material.

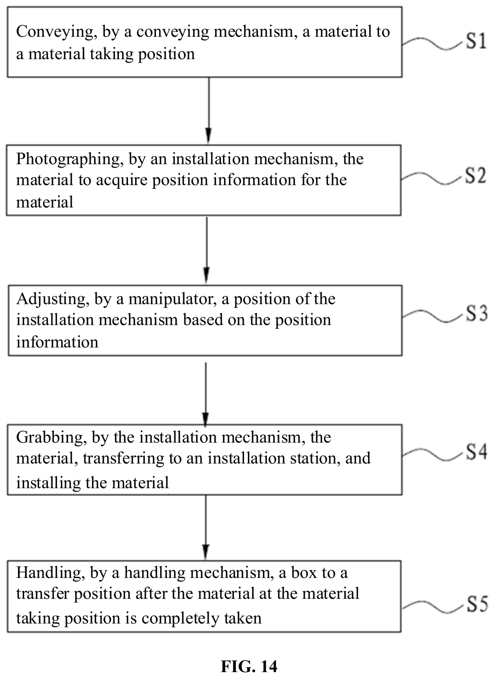

An embodiment of the present disclosure further provides an assembly method for a battery, applied, with reference to FIG. 14, an assembly system of any of the above solutions, the assembly method including:
S1, conveying, by the conveying mechanism, the material to the material taking position,
where the material is placed in the box, and the conveying mechanism conveys the box with the material, and the box is conveyed to the material taking position;
S2, photographing, by the installation mechanism, the material to acquire position information for the material,
where the installation mechanism photographs the material to acquire image information for each material within the box, and confirms, based on the image information for each material, the position information for a material to be grabbed as the position information of the material in some embodiments;
S3, adjusting, by the manipulator, a position of the installation mechanism based on the position information,
where specifically, based on the position information for the material, that is, based on the position information for the material to be grabbed, the manipulator adjusts the position of the installation mechanism to align with the material to be grabbed;
S4, grabbing, by the installation mechanism, the material, transferring to an installation station, and installing the material,
where the installation mechanism grabs the material, the installation mechanism above with the material is transferred to the installation station by the manipulator, and the installation mechanism cooperates with the manipulator to install the material;
and S5, handling, by the handling mechanism, the box to the transfer position after the material at the material taking position is completely taken.

It may be understood that the above steps S1 to S4 may be repeated many times until all the material in the box that is in the material taking position is grabbed.

The handling mechanism handles the box that is in the material taking position to the transfer position to facilitate inflow of the box with the material.

In some embodiments, the box includes trays and a material frame. The tray has a storage position for storing a material. A plurality of trays are stacked with one above another in the material frame. Step S5 includes the steps of:
S51, after the material in a tray at an upper level within the material frame of the box in the material taking position is completely taken, handling, by the handling mechanism, the empty tray at the upper level to the material frame in the transfer position;
S52, after the trays within the material frame in the material taking position are all handled to the material frame in the transfer position, removing, by the conveying mechanism, the material frame with the empty trays in the transfer position off the transfer position; or, after there is only one tray within the material frame in the material taking position, removing, by the conveying mechanism, the material frame with the empty trays in the transfer position off the transfer position;
and S53, handling, by the handling mechanism, the material frame that is in the material taking position to the transfer position.

It may be understood that step S51 may be repeatedly executed many times.

In some embodiments, the box 60 carrying the material flows into the feeding channel 21 and moves along the feeding direction of the feeding channel 21. The first detection mechanism 50 that is in the waiting position 21a obtains a detection signal for the box 60. The aforementioned detection signal triggers the movable limiting assemblies 32 to limit the box 60 that is in the waiting position 21a, such that the box 60 cannot move further toward the material taking position 21b until the material taking position 21b is vacated.

The first detection mechanism 50 that is in the material taking position 21b obtains a signal that the material taking position 21b is vacated. The aforementioned signal causes the movable limiting assemblies 32 to release limiting of the box 60 that is in the waiting position 21a. The box 60 continues to move along the feeding direction. The first detection mechanism 50 that is in the material taking position 21b obtains a detection signal for the box 60. The aforementioned detection signal for the box 60 triggers the positioning assembly 33 to position the box 60 that is in the material taking position 21b. The aforementioned detection signal for the box 60 triggers control for a material taking action of the manipulator 300, and the manipulator 300 moves the installation mechanism 200 to the material taking position 21b.

Taking the material being the explosion-proof valve 70 as an example, the first installation mechanism is used to connect to the manipulator 300. The first camera 202 performs photographing to acquire position information for the explosion-proof valve 70. The manipulator 300 adjusts the position of the first clamping jaw assembly 203 accordingly. The first clamping jaw assembly 203 clamps the explosion-proof valve 70 on a tray of the box 60 at the material taking position 21b. The manipulator 300 drives the first clamping jaw assembly 203 and the explosion-proof valve 70 to move to the battery assembly position. The first camera 202 performs photographing to acquire information about an installation region for the explosion-proof valve 70. The manipulator 300 adjusts the position of the explosion-proof valve 70 accordingly. The first clamping jaw assembly 203 installs the explosion-proof valve 70, and the two tightening mechanisms 204 provide screws and tighten the screws to fix the explosion-proof valve 70, thereby completing installation of one explosion-proof valve 70. The manipulator 300 drives the installation mechanism 200 to return to the material taking position 21b until all the explosion-proof valves 70 on a top tray of the box 60 have been clamped away.

The first grabbing mechanism 422 of the handling mechanism 40 grabs the tray at top of the material taking position 21b, and the adjustment mechanism 43 moves the first grabbing mechanism 422 with the tray grabbed to the transfer position 22a of the discharging channel 22 and puts the same within the material frame that is in the transfer position 22a. The manipulator 300 repeatedly grabs the explosion-proof valves 70 until the explosion-proof valves 70 on all the trays within the material frame that is in the material taking position 21b are grabbed away.

The material frame that is in the transfer position 22a is conveyed to the removal position 22b along the discharging direction, such that the transfer position 22a is vacated. The second grabbing mechanism 423 of the handling mechanism 40 grabs the material frame that is in the material taking position 21b. The adjustment mechanism 43 moves the second grabbing mechanism 423 and the material frame to the transfer position 22a. The positioning assembly 33 that is in the transfer position 22a positions the material frame until the unloaded trays within the material frame are filled up. The positioning assembly 33 at the transfer position 22a releases positioning of the material frame. The material frame filled up with unloaded trays is moved along the discharging direction, and the movable limiting assembly 32 on the removal position 22b side is triggered to extend, limiting the material frame filled up with the unloaded trays to the removal position 22b. When a next empty box 60 is required to be moved into the discharging channel 22, the movable limiting assembly 32 retracts and releases limiting of the material frame that is in the removal position 22b, and the material frame flows out along the discharging direction.

The above embodiments are merely used for illustrating rather than limiting the technical solutions of the present disclosure. Although the present disclosure has been described in detail with reference to the above embodiments, those of ordinary skill in the art should understood that the technical solutions recited in the above embodiments can still be modified thereby, or some or all of the technical features therein can be equivalently substituted thereby; and such modifications or substitutions do not make the essence of the corresponding technical solutions depart from the scope of the technical solutions of the embodiments of the present disclosure, all of which shall fall within the scope of the present disclosure. In particular, the technical features mentioned in the various embodiments may be combined in any manner as long as there is no structural conflict. The present disclosure is not limited to the specific embodiments disclosed herein.

### Industrial Applicability

For the material conveying apparatus of the embodiments of the present disclosure, the box carrying a material flows in from the feeding channel, is, before entering the material taking position, limited at the waiting position by the limiting mechanism that is in the waiting position to control a material inflow speed, flows into the material taking position after limiting is released, and is limited at the material taking position by the limiting mechanism that is in the material taking position to facilitate removal of the material. After the material within the box in the material taking position is entirely removed, limiting is released, and the box unloaded is handled to the transfer position on the discharging channel by the handling mechanism, and is limited by the limiting mechanism that is in the transfer position. After limiting is released, the box flows into the removal position, is limited by the limiting mechanism that is in the removal position, thereby controlling the material outflow speed, and flows out of the discharging channel after limiting is released. Various materials for battery assembly may be loaded into the box and conveyed by the material conveying apparatus, so the material conveying apparatus is highly versatile.

## Claims

1. A material conveying apparatus, comprising:
a chassis;
a conveying mechanism, comprising two conveying channels provided on the chassis, one of the two conveying channels being a feeding channel for conveying a box carrying a material, the other of the two conveying channels being a discharging channel for conveying the box that is unloaded;
a limiting mechanism, provided on the chassis or the conveying mechanism, and used to limit on the feeding channel a waiting position and a material taking position arranged along a feeding direction, and to limit on the discharging channel a transfer position and a removal position arranged along a discharging direction; and
a handling mechanism, provided on the conveying mechanism or the chassis, and used to handle the box located at the material taking position to the transfer position.

2. The material conveying apparatus according to claim 1, wherein the feeding channel and the discharging channel are provided side by side on the chassis, and the feeding direction is opposite to the discharging direction.

3. The material conveying apparatus according to claim 2, wherein the waiting position and the removal position are aligned along a direction perpendicular to an extension direction of the conveying channel, the waiting position and the removal position forming a first row of regions;
the material taking position and the transfer position are aligned along the direction perpendicular to the extension direction of the conveying channel, the material taking position and the transfer position forming a second row of regions;
the handling mechanism is provided between the first row of regions and the second row of regions.

4. The material conveying apparatus according to any one of claims 1 to 3, wherein the limiting mechanism comprises:
fixed limiting assemblies, capable of limiting the box and, respectively, provided on a side of the material taking position away from the waiting position and a side of the transfer position away from the removal position; and
movable limiting assemblies, capable of limiting or avoiding the box and, respectively, provided on a side of the waiting position close to the material taking position and a side of the removal position away from the transfer position.

5. The material conveying apparatus according to claim 4, wherein the fixed limiting assembly includes a first limiting member and a cushioning member, and the cushioning member is provided on a side of the first limiting member facing the box for the purpose of contact with the box.

6. The material conveying apparatus according to any one of claims 4 to 5, wherein the movable limiting assembly includes a first driving member and a second limiting member, the first driving member being in driving connection to the second limiting member;
the first driving member is capable of driving the second limiting member to extend to limit the box; the first driving member is capable of driving the second limiting member to retract to avoid the box.

7. The material conveying apparatus according to any one of claims 4 to 6, wherein the limiting mechanism further comprises:
positioning assemblies, capable of positioning or avoiding the box and, respectively, provided on a side of the material taking position close to the waiting position and a side of the transfer position close to the removal position, for the purpose of applying to the box an acting force toward the corresponding fixed limiting assembly to position the box.

8. The material conveying apparatus according to claim 7, wherein the positioning assembly includes a second driving member and a third limiting member, the second driving member being in driving connection to the third limiting member;
the second driving member is capable of driving the third limiting member to revolve into a moving path of the box, and to retract for applying an acting force to the box; the second driving member is capable of driving the third limiting member to extend to release the application of the acting force to the box, and to revolve out of the moving path of the box for avoiding the box.

9. The material conveying apparatus according to any one of claims 1 to 8, wherein the material conveying apparatus further comprises a plurality of first detection mechanisms that are used, respectively, to detect whether the box is present in the waiting position, the material taking position, the transfer position, and the removal position.

10. The material conveying apparatus according to any one of claims 1 to 9, wherein the handling mechanism comprises:
a transverse frame, provided on the conveying mechanism or the chassis;
a grabbing mechanism, for grabbing the box;
an adjustment mechanism, provided on the transverse frame and connected to the grabbing mechanism, for adjusting a position of the grabbing mechanism; and
a second detection mechanism, provided on the grabbing mechanism or the transverse frame, and used to detect a height of a tray of the box.

11. The material conveying apparatus according to claim 10, wherein the grabbing mechanism comprises:
a base plate, connected to the adjustment mechanism;
a first grabbing mechanism, for grabbing a tray of the box; and
a second grabbing mechanism, for grabbing a material frame of the box, the first grabbing mechanism, the second grabbing mechanism, and the second detection mechanism being all provided on the base plate, the second grabbing mechanism being located above the first grabbing mechanism.

12. The material conveying apparatus according to claim 11, wherein the first grabbing mechanism comprises:
two connecting sliding rails, provided in a spaced manner on the base plate;
a plurality of connecting brackets, having an elongated hole with an extension direction perpendicular to the connecting sliding rail, the connecting bracket being fasten connected to the connecting sliding rail via the elongated hole; and
a suction cup, each of the connecting brackets being provided with the suction cup thereon for sucking the tray.

13. The material conveying apparatus according to any one of claims 11 to 12, wherein the second grabbing mechanism comprises:
a clamping member, for clamping the material frame; and
a regulating member, provided on the base plate, two ends of the regulating member being, respectively, connected to two clamping members to regulate a distance for the clamping members.

14. The material conveying apparatus according to any one of claims 1 to 13, wherein the conveying channel comprises:
two guide side rails provided in spaced manner that are provided on the chassis;
a plurality of conveying rollers rotatably connected to the guide side rails and at least partially located between the two guide side rails, for conveying the box; and
a fourth driving member in driving connection to the conveying rollers.

15. An assembly system for a battery, comprising:
a material conveying apparatus according to any one of the claims 1 to 14, for conveying a material for the battery for material taking;
an installation mechanism, for grabbing and installing the material; and
a manipulator, connected to the installation mechanism for adjusting a posture of the installation mechanism.

16. The assembly system according to claim 15, wherein the material is an explosion-proof valve, and the installation mechanism is a first installation mechanism, comprising:
a first connecting base, for connecting to the manipulator;
a first camera, provided on the first connecting base for acquiring position information for the explosion-proof valve;
a first clamping jaw assembly, provided on the first connecting base for clamping the explosion-proof valve; and
a tightening mechanism, provided on the first connecting base for tightening a screw to install the explosion-proof valve.

17. The assembly system according to claim 16, wherein there are two tightening mechanisms, the two tightening mechanisms are correspondingly provided on two sides of the first clamping jaw assembly, and a position of at least one of the tightening mechanisms relative to the other tightening mechanism is capable of being adjusted.

18. The assembly system according to claim 17, wherein the first installation mechanism further comprises:
a first spacing-changing mechanism, provided on the first connecting base and connected to the first clamping jaw assembly, for regulating a position of the first clamping jaw assembly at the first connecting base; and
a second spacing-changing mechanism, provided on the first connecting base with one of the tightening mechanisms fixedly connected to the first connecting base and with the other tightening mechanism movably connected to the first connecting base, allowing for regulation of the position under driving of the second spacing-changing mechanism.

19. The assembly system according to any one of claims 16 to 18, wherein the first clamping jaw assembly comprises:
a first lifting assembly, provided on the first connecting base;
a clamping driving member, provided on the first lifting assembly and capable of being lifted up and down under driving of the first lifting assembly; and
two clamping jaws, provided on the clamping driving member and capable of moving to each other under the driving of the clamping driving member to clamp the explosion-proof valve, one end of the clamping jaw away from the clamping driving member being provided with an arc groove.

20. The assembly system according to any one of claims 15 to 19, wherein the material is a cable tie, and the installation mechanism is a second installation mechanism, comprising:
a second connecting base, for connecting to the manipulator;
a second camera, provided on the second connecting base for acquiring position information for the cable tie; and
a second clamping jaw assembly, provided on the second connecting base for clamping the cable tie.

21. A production line for a battery, comprising:
an assembly system according to any one of claims 15 to 20; and
an installation stage, having an installation position for placing the battery, the manipulator being capable of moving the installation mechanism with the material to the installation position and adjusting a posture of the installation mechanism to assemble the material.

22. An assembly method for a battery, applied to the assembly system according to any one of claims 15 to 20, the assembly method comprising:
conveying, by the conveying mechanism, the material to the material taking position;
photographing, by the installation mechanism, the material to acquire position information for the material;
adjusting, by the manipulator, a position of the installation mechanism based on the position information;
grabbing, by the installation mechanism, the material, transferring to an installation station, and installing the material;
and handling, by the handling mechanism, the box to the transfer position after the material at the material taking position is completely taken.

23. The assembly method according to claim 22, wherein the step of handling, by the handling mechanism, the box to the transfer position after the material at the material taking position is completely taken comprises:
after the material in a tray at an upper level within a material frame of the box in the material taking position is completely taken, handling, by the handling mechanism, the empty tray at the upper level to the material frame in the transfer position;
after the trays within the material frame in the material taking position are all handled to the material frame in the transfer position, removing, by the conveying mechanism, the material frame in the transfer position off the transfer position; or, after there is only one empty tray within the material frame in the material taking position, removing, by the conveying mechanism, the material frame in the transfer position off the transfer position;
and handling, by the handling mechanism, the material frame that is in the material taking position to the transfer position.
